# EUROPÄISCHE PATENTANMELDUNG

(11) **EP 1 752 422 A2**
(43) Veröffentlichungstag der Anmeldung: **14.02.2007**
(21) Anmeldenummer: 06117800.0
(22) Anmeldetag: 25.07.2006
(51) Int. Cl.: C02F 1/68

(54) **Verfahren zur Bekämpfung von Legionellen in Wasserversorgungsnetzen**

(30) Priorität: 29.07.2005 DE 102005035587
(71) Anmelder: Messer France S.A.S., 92601 Asnières sur Seine Cédex (FR)
(72) Erfinder: Arnoux, Stéphane, 95160, Montmorency (FR); Milan, Emmanuel, 75018, Paris (FR)
(74) Vertreter: Münzel, Joachim R.

(57) **Zusammenfassung**

Zur Bekämpfung von Legionellen wird dem Trinkwasser von Versorgungsnetzen Chlor, Ozon zugesetzt oder das Wasser wird regelmäßig erhitzt oder mit UV-Licht bestrahlt. Die bestehenden Verfahren haben den Nachteil, dass sie teils sehr aufwendig sind, teils die Korrosion des Leitungsnetzes fördern und teils eine regelmäßige Wartung des Versorgungsnetzes erfordern.

Zur Überwindung dieser Nachteile wird vorgeschlagen, in das Wasser Kohlendioxid in flüssiger oder gasförmiger Form einzuspeisen. Das Kohlendioxid löst sich gut in Wasser und führt wegen der Herbeiführung anaerober Bedingungen im Wasser sowie der Bildung von Bicarbonat- und Carbonationen und des niedrigen pH-Wertes zur Abtötung vorhandener Legionellen im Wasser und zu einer wirksamen Unterdrückung der Neubildung von Legionellen. Bevorzugt wird das Kohlendioxid in Form von Pulsen unterschiedlicher pro Zeiteinheit eingetragener Kohlendioxidmenge eingetragen.

## Beschreibung

Die Erfindung betrifft ein Verfahren zum Bekämpfung von Legionellen in Wasserversorgungsnetzen, insbesondere in Netzen zur Trinkwasserversorgung.

Die Legionellen, die in geringer Zahl auch gemäßigten Breiten in praktisch jedem Gewässer vorkommen, finden insbesondere in Warmwasserreservoirs, wie sie in Hotels, Krankenhäusern oder Schwimmbädern eingesetzt werden, optimale Wachstumsbedingungen. Dabei konzentrieren sich die Bakterien in dem sogenannten Bio-Film, einer nährstoff- und mikrobenreichen Schicht, die sich auf die Innenoberflächen von Leitungen und Tanks legt. Mit dem Wasser gelangen sie dann in die Räume, mit dem Wasserdampf in die Luft und schließlich in die Lunge. Einer der Hauptübertragungswege ist Aerosol, das sich beim Duschen oder am Strahlregler des Wasserhahn oder in Klimaanlagen bildet.□Dabei besteht bei Gesunden nur eine geringe Infektionsgefahr; problematisch ist jedoch, wenn die Legionellen in hoher Zahl auftreten und das Immunsystem des die Legionellen Einatmenden geschwächt ist. In solchen Fällen können Legionellen nicht selten tödlich verlaufende Erkrankungen der Lunge auslösen. Aus diesem Grunde ist die Bekämpfung von Legionellen insbesondere bei der Trinkwasserversorgung von Krankenhäusern und Altenheimen von herausragender Bedeutung.

Es ist daher wichtig, die im Wasser vorhandenen Legionellen möglichst vollständig abzutöten. Bei der sogenannten Hitz-Entkeimung wird das gesamte System regelmäßig mehr als 30 Minuten lang mit über 70° Celsius warmem Wasser durchgespült. Die Hitz-Entkeimung wirkt jedoch nur kurzfristig, die Entkeimung muss regelmäßig alle zwei bis drei Wochen wiederholt werden, und der Aufwand ist bei komplexen Versorgungsnetzen beträchtlich.

Eine Alternative stellt die Kupfer-Silber-lonisierung des Wassers dar. Dabei wird mit einer Elektrolyseeinheit das Wasser in geringen Mengen mit Kupfer- und Silberionen versetzt, die für die Legionellen, nicht aber für den Menschen schädlich sind. Die Elektrolysezellen müssen jedoch regelmäßig entkalkt und überprüft werden, bei einer zu hohen Konzentration der Ionen ist sonst eine Verfärbung des Wassers sowie der Sanitärkeramik denkbar.

Für kleine Leitungssysteme ist auch die Behandlung des Wassers mit UV-Strahlen eine denkbare Alternative. Die UV-Strahlen schädigen das Erbgut der Legionellen. Auch bei solchen Geräten ist eine regelmäßige Wartung unvermeidlich; zudem ist dieses Methode bei Systemen mit großem Wasserdurchsatz wirtschaftlich nicht zu vertreten.

Eine weitere Art der Legionellenbekämpfung ist die Hyperchlorierung des Leitungssystems. Allerdings ist dieses Verfahren mit erheblichen Folgekosten verbunden. Da die Legionellen relativ unempfindlich auf Chlor reagieren, muss man das Chlor hoch dosieren, was zu einer starken Korrosion an den Rohren führt.

In der EP 0 899 240 A1 wird ein Verfahren zur Wasserbehandlung beschrieben, bei der in das Wasser gleichzeitig Ozon und Kohlendioxid eingetragen wird. Dabei ist ein Rohleitungssystem mit einer Gasquelle für Ozon und einer Quelle für gasförmiges Kohlendioxid verbunden und mit Mitteln zur Erfassung der Menge der Durchflussrate, der Temperatur, des pH-Wertes und der Menge der gelösten Gase ausgerüstet. Das Ozon dient dabei dazu, die im Wasser vorhandenen Bakterien, insbesondere Legionellen, abzutöten, während das Kohlendioxid den pH-Wert des Wassers absenken und dadurch die Bildung von Wasserstein unterdrücken soll. Nachteilig bei diesem Verfahren ist der dabei notwendige apparative Aufwand sowie die hohen Kosten der Ozonisierung.

Die Aufgabe der vorliegenden Erfindung ist daher, eine einfache Möglichkeit zur Behandlung von Wasser in Versorgungsnetzen anzugeben, die die Ausbildung von Legionellen im Wasser wirksam unterdrückt und die Nachteile der bekannten Verfahren überwindet.

Gelöst ist diese Aufgabe durch ein Verfahren mit den Merkmalen des Patentanspruchs 1.

Erfindungsgemäß wird also das Wasser des Versorgungsnetzes ausschließlich mit Kohlendioxid versetzt. Es hat sich nämlich herausgestellt, dass im Wasser gelöstes Kohlendioxid nicht nur wirkungsvoll die Bildung von Wasserstein unterdrückt, sondern oberhalb einer gewissen Konzentration auch im Wasser bereits vorhandene Legionellen abtötet. Der Grund hierfür dürfte sein, dass die Lösung von Kohlendioxid im Wasser zu stark anaeroben Bedingungen führt, die für die aerobe Legionellen lebensfeindlich sind. Die bei der Lösung des Kohlendioxids entstehenden Hydrocarbonat- und Carbonationen sowie der erniedrigte pH-Wert verhindern zudem wirkungsvoll das Wachstum der Bakterien und die Ausbildung von Wasserstein. Eine aufwendige Ozoniserung zum Abtöten der Bakterien erübrigt sich somit. Zwar ist es bekannt, gasförmiges Kohlendioxid, das sich im Wasser sehr gut löst, in das Wasser einzuspeisen, um die Bildung von Wasserstein in den Leitungen zu unterdrücken und um den pH-Wert des Wassers an den natürlichen pH-Wert der Haut anzugleichen; verschiedene Systeme zum Eintragen von Kohlendioxid im gasförmigen Zustand in ein Wasserleitungsnetz werden beispielsweise in der EP 0 682 979 A1 beschrieben. Zur direkten Bekämpfung und Abtötung von Legionellen wurde Kohlendioxid bislang jedoch noch nicht eingesetzt.

Unter "Versorgungsnetze" sollen hier alle Systeme zur Versorgung mit Kalt- oder Warmwasser verstanden werden, bei denen die Möglichkeit des direkten Kontakts des Wassers mit Menschen oder Tieren besteht, also insbesondere Trinkwassersysteme oder Brauchwassersysteme, letztere beispielsweise zur Versorgung mit Wasser zu Wasch- oder Reinigungszwecken oder für Sanitäranlagen, zur Pflanzenbewässerung oder zur Kühlung von Anlagen. Beispiele sind Versorgungsnetze von Krankenhäusern, Altenheimen, Hotels, Gärtnereien, öffentlichen Einrichtungen wie Schwimmbädern oder Wasserspielplätze oder von Trink-, Brauch- oder Grauwassersysteme in Privathaushalten.

Eine vorteilhafte Weiterbildung der Erfindung sieht vor, dass die Eintragung des Kohlendioxids in das Wasser in aufeinander abfolgenden Phasen mit jeweils unterschiedlicher pro Zeiteinheit eingetragener Kohlendioxidmenge erfolgt, also in einer Abfolge aus starken und schwachen bzw. keinem Kohlendioxideintrag. Während einer Phasn mit starkem Kohlendioxideintrag ist der pH-Wert des Wassers deutlich, bis hinab zu einem Wert von pH=5,5 abgesenkt und die Konzentration der Hydrocarbonat- und Carbonationen ist besonders hoch. Diese Phase starken Kohlendioxideintrags kann beispielsweise durch kurze, pulsartige Einträge von wenigen Minuten Dauer realisiert werden. Während dieser Phase werden im Wasser vorhandene Legionellen abgetötet. Nach Beendigung einer Phase mit starkem Kohlendioxideintrag genügt es für eine gewisse Zeitdauer, beispielsweise einige Stunden oder Tage, kein oder eine nur geringere Menge an Kohlendioxid einzutragen und das Wasser somit nur schwach anzusäuern. Während einer solchen Phase mit geringem Kohlendioxideintrag wird ein pH-Wert des Wassers angestrebt, der einerseits ausreicht, um die Bildung von Wasserstein und/oder eines Biofilms zuverlässig zu unterbinden, der andererseits jedoch die Korrosion der Leitung möglichst gering hält. Nach einer solchen Phase geringen Kohlendioxideintrags folgt dann wiederum eine Phase starken Kohlendioxideintrags, um zwischenzeitlich etwaig neu gebildete oder in das Wasser eingedrungene Legionellen abzutöten. Die Abfolge kann dabei periodisch sein, d.h. in im Wesentlichen konstanten Zeitabständen erfolgt jeweils ein starker Kohlendioxideintrag. Die Periodendauer wird dabei den Erfordernissen entsprechend eingestellt und hängt insbesondere vom Verwendungszweck des Wassers und dem Grad der Gefahr eines wiederkehrenden Legionellenbefalls ab, der wiederum beispielsweise vom Zustand der Leitungen beeinflusst wird.

Die Menge des einzutragenden Kohlendioxids wird dabei vorteilhaft in Abhängigkeit verschiedener wasserspezifischer Parameter geregelt, wie beispielsweise der Durchflussrate, dem Druck oder dem pH-Wert des Wassers, der Anzahl vorhandener Keime oder der Größe eines etwaig vorhandenen Biofilms oder Wassersteins in der Leitung oder dem vorgesehenen Verwendungszweck des Wassers. Je nach Ausgangssituation kann der Kohlendioxideintrag zwischenzeitlich für eine begrenzte Zeitdauer noch weiter reduziert oder sogar ganz eingestellt werden. Auf diese Weise wird das Kohlendioxid besonders wirtschaftlich eingesetzt und die Leitungen geschont.

Eine vorteilhafte Weiterführung der Erfindung sieht vor, dass das Kohlendioxid in flüssigem Zustand injiziert wird. Kohlendioxid, das gut in Wasser löslich ist, liegt bei einem Druck von über 55 bar bei Raumtemperatur im flüssigen Zustand vor und kann daher auch in nichtisolierten Druckleitungen aus einer Kohlendioxidquelle, beispielsweise eine Drucktank herangeführt werden.

In Versorgungsnetzen für Warmwasser wird das Kohlendioxid bevorzugt injiziert, bevor das Wasser beheizt wird. Der zum Einbringen des Kohlendioxids eingesetzte Injektor ist also strömungstechnisch gesehen vor einem in einer Leitung des Versorgungsnetzes angeordneten Heizelement angeordnet.

Die Aufgabe der Erfindung wird auch durch ein System zur Wasserversorgung mit den Merkmalen des Anspruchs 6 gelöst.

Das erfindungsgemäße System zur Wasserversorgung umfasst also ein Versorgungsnetzwerk und einen dem Versorgungsnetzwerk zugeordneten, an eine Quelle für flüssiges Kohlendioxid angeschlossenen Injektor, dem ein Stellventil und eine auf das Stellventil einwirkende Steuereinheit zum Dosieren der injizierten Kohlendioxidmenge nach einem vorgegebenen Programm zugeordnet ist.

Da Kohlendioxid eine schwache Säure ist, sinkt der pH-Wert selbst bei hoher Konzentration nicht unter den Wert von 5,5. Es besteht daher für die Leitungen nur eine geringe Korrosionsgefahr. Der erniedrigte pH-Wert verhindert zudem die Bildung von Wasserstein und ähnlichen Kalkablagerungen, die ein wesentlichster Mediator der Biofilmbildung sind. Um die Korrosionsgefahr weiter zu mindern, beträgt der pH-Wert des behandelten Wassers pH=6,5 und entspricht damit dem von der EU-Trinkwasserrichtlinie 98/83/EG empfohlenen Wert. Dieser Wert werden im Mittel auch durch den Eintrag des Kohlendioxids in aufeinander folgenden Phasen unterschiedlicher Konzentration erreicht.

Vorzugsweise sind im Versorgungsnetzwerk mit der Steuereinheit in Datenverbindung stehende Sensoren zur Detektierung von wasserspezifischen Parametern wie Keimzahl, pH-Wert, o. ä. vorgesehen. Auf dieses Weise lässt sich die Zuführung von Kohlendioxid in Abhängigkeit von diesen Parametern regeln und somit ein besonders effektiver Einsatz des Kohlendioxids erreichen.

### Beispiel

In das Wasserversorgungsnetzwerk eines Krankenhauses wird für einige Minuten Kohlendioxid in hoher Dosis eingespeist. Der pH-Wert des Wassers sinkt für eine kurze Zeit auf Werte um pH=5,5 ab. Das Erreichen dieses pH-Wertes und die Zeitdauer, während dieser pH-Wert im Wasser aufrechterhalten wird, wird von Sensoren erfasst und in einer Steuereinheit kontrolliert. Etwaig im Wasser vorhandene Legionellen werden dadurch abgetötet. Anschließend wird der Zufluss von Kohlendioxid für eine längere Zeitdauer von einigen Stunden eingestellt, mit Ausnahme kurzzeitiger Einspeisungen geringer Mengen von Kohlendioxid, die den pH-Wert des Wassers nicht unter pH=6,5 absenken. Diese kurzzeitigen Einspeisungen dienen der Unterdrückung der Wassersteinbildung. Nach einigen Stunden findet wiederum eine starke Kohlendioxideinspeisung statt, durch die etwaig zwischenzeitlich in das Wasserversorgungsnetzwerk eingedrungene Legionellen abgetötet werden. Daran schließt sich wieder eine längere Periode geringer Kohlendioxid an. Durch die periodische Abfolge von starken und schwachen Kohlendioxideinspeisungen wird das Eindringen von Legionellen in das Wasserversorgungsnetzwerk zuverlässig unterdrückt, und das Kohlendioxid wird sparsam und in einer die Leitungen schonenden Weise eingesetzt.

## Patentansprüche

1. Verfahren zur Bekämpfung von Legionellen in Versorgungsnetzen zur Wasserversorgung, insbesondere Trinkwasserversorgungsnetzen, **dadurch gekennzeichnet, dass** das Wasser des Versorgungsnetzes mit Kohlendioxid versetzt wird und **dadurch** Legionellen abgetötet werden.

2. Verfahren nach Anspruch 1, **dadurch gekennzeichnet, dass** die Eintragung des Kohlendioxids in das Wasser in aufeinander folgenden Phasen unterschiedlicher pro Zeiteinheit eingetragener Kohlendioxidmenge erfolgt.

3. Verfahren nach Anspruch 2, **dadurch gekennzeichnet, dass** die Dauer der Phasen und/oder die während einer Phase eingetragene Kohlendioxidmenge in Abhängigkeit von Messungen wasserspezifischer Parameter, wie pH-Wert, Anzahl der Keime oder Ähnliches, geregelt wird.

4. Verfahren nach einem der vorhergehenden Ansprüche, **dadurch gekennzeichnet, dass** das Kohlendioxid in flüssiger Form in das Wasser eingespeist wird.

5. Verfahren nach einem der vorhergehenden Ansprüche, **dadurch gekennzeichnet, dass** die Injektion des Kohlendioxids vor einer Beheizung des Wassers erfolgt.

6. System zur Wasserversorgung, mit einem Versorgungsnetzwerk und einen dem Versorgungsnetzwerk zugeordneten, an eine Quelle für flüssiges Kohlendioxid angeschlossenen Injektor, dem ein Stellventil und eine auf das Stellventil einwirkende Steuereinheit zum Dosieren der injizierten Kohlendioxidmenge nach einem vorgegebenen Programm zugeordnet ist.

7. System zu Wasserversorgung nach Anspruch 6, **dadurch gekennzeichnet, dass** im Versorgungsnetzwerk mit der Steuereinheit in Datenverbindung stehende Sensoren zum Detektieren von wasserspezifischen Parametern wie Keimzahl, pH-Wert, o.ä. vorgesehen sind.
